# EUROPEAN PATENT APPLICATION

(11) **EP 2 628 863 A2**
(43) Date of publication of application: **21.08.2013**
(21) Application number: 13154914.9
(22) Date of filing: 12.02.2013
(51) Int. Cl.: E03B 7/07

(54) **Water damage protection system**

(30) Priority: 14.02.2012 GB 201202485
(71) Applicant: Dixon, Andrew, Kendal, Cumbria LA9 7NZ (GB)
(72) Inventor: Dixon, Andrew, Kendal, Cumbria LA9 7NZ (GB)
(74) Representative: London IP Ltd

(57) **Abstract**

A water damage protection system comprises a detection means adapted to monitor the occupancy of a premises, and an electrically operable stop valve positioned on a water supply to the premises. The system is adapted to automatically activate the stop valve so as to cut the water supply to the premises when the premises have been unoccupied for a predetermined period of time. A method of using the same system is also disclosed.

## Description

The present invention relates to a water damage protection system. More specifically, the present invention relates to an automatic water damage protection system.

Static caravans and holiday homes can be unoccupied for many weeks during the holiday season leaving the property vulnerable to water damage due to burst pipework, rodent damage to pipes and fittings or faulty parts leading to leakage.

Conventionally water supplies are turned off using a manual stop tap, which is usually located under the mobile home or in a kitchen cupboard

Furthermore, manual drain points for such water systems, which evacuate the pipework of water to prevent freezing and burst pipes during cold conditions are located on the lowest part of the pipework, usually under the mobile home.

Often the manual stop tap and drain valves are difficult to reach, particularly if the owner is elderly or physically disabled. This problem is exacerbated by a trends towards the fitment of verandas and side rails to mobile homes once a mobile home is in position. These additions obscure the access points to the valves making them even more inaccessible.

Furthermore, holiday homes are often on short term holiday rental, and guests routinely leave water supplies on when departing.

As such, holiday homes are particularly prone to water damage during periods of cold weather.

The present invention seeks to address this issue.

According to a first aspect of the present invention there is provided a water damage protection system for a premises having pipework comprising detection means adapted to monitor the occupancy of a premises, an electrically operable stop valve positioned on a water supply to the premises, wherein the system is adapted to automatically activate the stop valve so as to cut the water supply to the premises when the premises have been unoccupied for a predetermined period of time, **characterized in that** the system comprises at least one automatic drain valve adapted to open so as to drain water from the pipework when the water pressure falls below a predetermined level after the stop valve is activated.

By providing an electronic means to monitor the occupancy of a premises such that once the premises has been unoccupied for a predetermined period of time the mains water supply is cut, the chances of water damage are minimized. Further, by providing means to automatically drain water from the pipework the chances of water damage owing to a pipe bursting are minimized as water may be drained from the pipework before it has a chance to freeze. The provision of one or more automatic drain valves, which actuate when the line pressure drops below a level is an ideal way to allow for automatic drainage of the pipework as it does not require any electronic circuitry or wiring.

Preferably the system comprises a plurality of automatic drain valves adapted to open so as to drain water from the pipework when the water pressure falls below a predetermined level.

In one embodiment the system comprises at least one electrically operable valve adapted to open so as to drain water from the pipework.

Preferably the system comprises a plurality of electrically operable valves adapted to open so as to drain water from the pipework.

The provision of one or more electrically operable valves can ensure that the pipework is drained almost immediately after the mains water supply is cut.

In one embodiment the detection means comprises a motion sensor.

A motion sensor is a cheap and effective way to monitor occupancy of a premises.

In one embodiment the detection means comprises means to monitor electricity and/or water usage in the premises.

In one embodiment the detection means comprises means to monitor the use of entry and/or exit points of the premises.

In one embodiment the electrically operable stop valve comprises a motorised ball valve.

Motorized ball valves are relatively frost-resistant and successful operation of the system may be maximized by their deployment.

In one embodiment the electrically operable stop valve comprises a solenoid valve.

Preferably the system comprises at least one flood sensor located in the premises adapted to operate the stop valve when the flood sensor is activated.

Provision of one or more flood sensors provides an additional functionality to the system, such that in the event of a leak causing flooding, irregardless of the occupancy of the premises the mains water may be automatically cut off.

According to a second aspect of the present invention there is provided a method of protecting from water damage for a premises having pipework comprising the steps of:
i) providing detection means adapted to monitor the occupancy of a premises
ii) providing an electrically operable stop valve positioned on a water supply to the premises,
iii) detecting that the premises have been unoccupied for a predetermined period of time;
iv) automatically activating the stop valve so as to cut the water supply to the premises;
v) automatically draining water from the pipework after the stop valve is activated;
**characterized in that** means to automatically drain water from the pipework comprises at least one automatic drain valve adapted to open so as to drain water from the pipework when the water pressure falls below a predetermined level.

Preferably the means to automatically drain water from the pipework comprises a plurality of automatic drain valves adapted to open so as to drain water from the pipework when the water pressure falls below a predetermined level.

In one embodiment the means to automatically drain water from the pipework comprises at least one electrically operable valve adapted to open so as to drain water from the pipework.

Preferably the means to automatically drain water from the pipework comprises a plurality of electrically operable valves adapted to open so as to drain water from the pipework.

In one embodiment the detection means comprises a motion sensor.

In one embodiment the detection means comprises means to monitor electricity and/or water usage in the premises.

In one embodiment the detection means comprises means to monitor the use of entry and/or exit points of the premises.

In one embodiment the electrically operable stop valve comprises a motorised ball valve.

In one embodiment the electrically operable stop valve comprises a solenoid valve.

Preferably the method comprises providing at least one flood sensor located in the premises adapted to operate the stop valve when the flood sensor is activated.

A specific embodiment will now be described with reference to the accompanying drawings, which exemplify the present invention and, together with the description, serve to explain and illustrate principles of the invention. The examples given are intended to be illustrative and are not inherently restricted to particular apparatus.

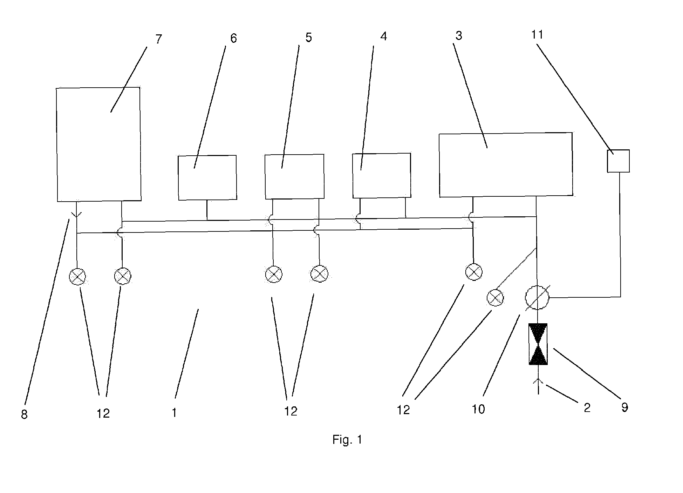

Figure 1 is a schematic diagram of an example pipework layout comprising the system of the present invention;
Figure 2 is an example of a control panel for use with the system of Figure 1.

Referring to the drawings, a mobile home (not shown) comprises pipework 1 having mains water inlet 2 that feeds kitchen sink 3, washbasin 4, shower 5, toilet 6 and combi boiler 7 of the home..

Combi boiler hot water outlet 8 feeds shower 5, washbasin 4 and kitchen sink 3.

At mains water inlet is located manual stop valve 9, as is typical in pipework for domestic and commercial premises.

Adjacent to, and downstream from manual stop valve 9 is located motorized ball valve 10. Motorized ball valve 10 is electrically changeable between a first state wherein mains water is freely allowed to flow into the pipework 1, and a second state wherein the mains water supply to pipework 1 is cut off. Although in the present embodiment a motorized ball valve is used, other types of valves, such as solenoid valves might be employed. However, the inventor of the present invention has found that motorized ball valves appear to be preferable as they are less prone to frost damage than solenoid valves.

Motorized ball valve 10 is connected to control panel 11, which is located in the hallway (not shown) of the mobile home.

Although in the present embodiment motorized ball valve is connected to control panel 11 by means of a wire, in other embodiments other means of connection, such as remote control might be employed.

Furthermore, although in the present embodiment control panel 11 is located in a hallway of the mobile home, it might be positioned in any appropriate location where it is able to detect the occupancy state of the home. For example (non-exhaustively) in the kitchen, living room, or bedroom.

Pipework 1 also incorporates a plurality of automatic drain valves 12 that each incorporate a spring and ball bearing arrangement that opens the valve when the line pressure is below approximately 50kPa and close at pressures above. Examples of such drain valves used for irrigation may be seen in US7377286.

Automatic drain valves 12 are situated below ground level (not shown) and are positioned so as to release water from the feed lines of appropriate fitments, in the present embodiment combi boiler 7, shower 5 and sink 3.

Typically mobile homes comprise a manual drain valve at the lowest point of their pipework systems so as to allow a person to initiate the draining of the pipework under gravity.

Although in the present embodiment a plurality of automatic drain valves 12 are employed, in some embodiments a single automatic drain valve may be used positioned at or near the lowest point on the pipework.

However, it is preferable to employ a plurality of automatic drain valves 12 that may act to directly protect the most expensive fitments, for example a combi boiler 7 or shower 5.

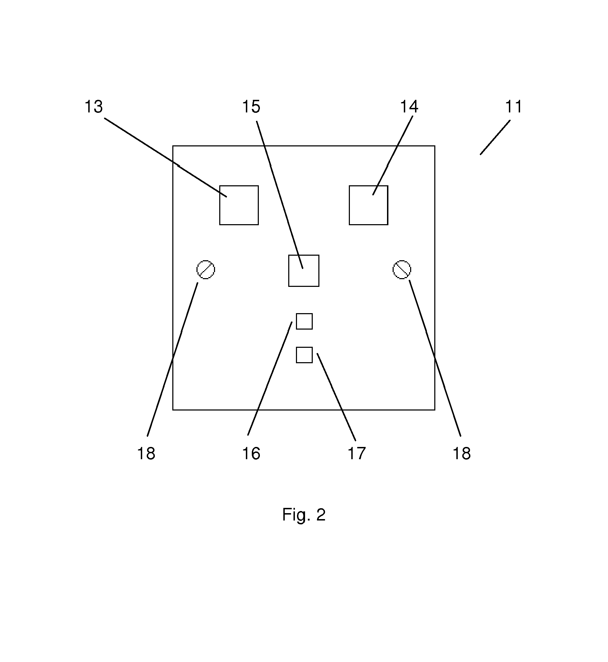

Turning to Figure 2, control panel 11 comprises a non-latching on button 13 operable to open motorized ball valve 10 and allow a flow of mains water into pipework 1. Control panel 11 also comprises a non-latching off-button 14 operable to close motorized ball valve 10 so as to cut off mains water supply to pipework 1.

Control panel 11 further comprises passive infra-red (PIR) detector 15 operable detect movement in the room that control panel 11 is located in.

Control panel 11 is adapted, by means of a suitable electronic control unit (in the present embodiment in the form of a PCB, not shown) and PIR detector 15, to automatically close motorized ball valve 10 if movement is not detected in the mobile home by PIR detector 15 for a predetermined period of time.

Control panel 11 may comprise programming means (for example a plurality of DIP switches, a rotary switch, or in other embodiments computer programming) so as to allow a user of the present invention to set the predetermined period of time to their requirements. Such programming means might allow the predetermined period of time to be set at, for example, 12 hours, 18, hours, 24 hours 48 hours, 72 hours or any other appropriate period of time.

Control panel 11 is powered by a battery (not shown), but may also be powered by mains electricity or a combination of both, with the battery acting as back up in case mains power is lost or deliberately cut. In the present embodiment the battery that powers control panel 11 also powers motorized ball valve 10.

Control panel 11 comprises a battery level indicator LED 16 that activates to indicate that the battery needs replacing.

Control panel 11 is of the size of a single gang electrical outlet and is adapted to be fitted using screws 18 onto any standard single cavity box or surface pattress.

Control panel 11 also comprises means to cooperate with flood sensors (not shown) that are activated by water bridging appropriate terminals. Control panel 11 may cooperate wirelessly with such sensors or might be hardwired to them.

A plurality of such sensors may be deployed around the mobile home such that in the event of a flood control panel acts to close motorized ball valve 10 and thereby prevent further mains water from worsening the flood. If such a flood sensor is activated alarm indicator LED 17 illuminates and will not turn off until the respective terminals are unbridged. Furthermore, in some embodiments, if a flood sensor is activated on button 13 may remain inoperable until the respective terminals are unbridged.

Turning to the system in use, once an occupant of the mobile home exits the premises PIR detector 15 ceases to detect movement. Thus the predetermined time period begins to elapse. If the occupant returns to the mobile home PIR detector 15 is activated and counting of the predetermined time period begins once more.

However, if the occupant does not return within the predetermined time period PIR detect 15 will not detect any movement within the mobile home.

Thus the control unit activates closure of motorized ball valve 10, thereby cutting the mains water supply to pipework 1. Cessation of the mains water supply greatly reduces the chances of any flooding of the mobile home occurring.

Along with closing motorized ball valve 10 the control unit cuts power to PIR sensor 15 so as to maximize battery life. Control panel 11 remains in this state until manual operation of on button 13 by a user.

However, prior to the reopening of motorized ball valve 10, the water pressure in pipework 1 gradually diminishes owing to natural wastage, for example through toilet valves and taps. When the pressure has lowered to approximately 50kPa automatic drain valves 12 open. Thus, the water in pipework 1 slowly drains out of the system owing to gravity.

Thus pipework 1 is protected from frost damage by pipes bursting. Even if a pipe were to burst before pipework 1 could be fully drained, owing to the mains water supply having been cut any flooding damage will be minimal.

Once a user returns, and upon noticing that the water supply has ceased, the user may press on button 13 so as to open motorized ball valve 10 and resume a supply of mains water to pipework 1.

As the line pressure in pipework 1 increases above around 50 kPa automatic drain valves 12 close, thereby sealing pipework 1 and allowing normal operation of the plumbing system.

Although the present embodiment employs motion-sensing to activate closure of motorized ball valve 10 it will be apparent to a person skilled in the art that other measures of occupancy may be used. For example, it would be possible to measure whether or not water is being used in the premises, or possible to monitor whether or not one or more entry/exit doors are used. Multiple methods to monitor occupancy are possible.

It will further be apparent that although the present embodiment comprises automatic drain valves so as to empty the pipework when the line pressure falls below a certain level, in some embodiments it might be preferred to comprise one or more electronically activated drain valves that are actuated after the mains water has been cut off.

Many variations are possible without departing from the scope of the present invention as set out in the appended claims.

## Claims

1. A water damage protection system comprising detection means adapted to monitor the occupancy of a premises, an electrically operable stop valve positioned on a water supply to the premises, wherein the system is adapted to automatically activate the stop valve so as to cut the water supply to the premises when the premises have been unoccupied for a predetermined period of time, **characterized in that** the system further comprises at least one automatic drain valve adapted to open so as to drain water from the pipework when the water pressure falls below a predetermined level after the stop valve is activated.

2. The system of claim 1 comprising a plurality of automatic drain valves adapted to open so as to drain water from the pipework when the water pressure falls below a predetermined level

3. The system of any claim 1 or 2 comprising at least one electrically operable valve adapted to open so as to drain water from the pipework.

4. The system of any preceding claim wherein the detection means comprises a motion sensor.

5. The system of any of claims 1 to 4 wherein the detection means comprises means to monitor electricity and/or water usage in the premises.

6. The system of any of claims 1 to 4 wherein the detection means comprises means to monitor the use of entry and/or exit points of the premises.

7. The system of any preceding claim wherein the electrically operable stop valve comprises a motorised ball valve or a solenoid valve.

8. The system of any preceding claim comprising at least one flood sensor located in the premises, and wherein the system is adapted to operate the stop valve when the flood sensor is activated.

9. A method of protecting from water damage comprising the steps of:
a. providing detection means adapted to monitor the occupancy of a premises
b. providing an electrically operable stop valve positioned on a water supply to the premises,
c. detecting that the premises have been unoccupied for a predetermined period of time;
d. automatically activating the stop valve so as to cut the water supply to the premises;
e. automatically draining water from the pipework after the stop valve is activated;
**characterized in that** means to automatically drain water from the pipework comprises at least one automatic drain valve adapted to open so as to drain water from the pipework when the water pressure falls below a predetermined level.

10. The method of claim 9 wherein the means to automatically drain water from the pipework comprises a plurality of automatic drain valves adapted to open so as to drain water from the pipework when the water pressure falls below a predetermined level

11. The method of claim 9 or 10 wherein the means to automatically drain water from the pipework comprises at least one electrically operable valve adapted to open so as to drain water from the pipework.

12. The method of any of claims 9 to 11 wherein the detection means comprises a motion sensor.

13. The method of any of claims 9 to 11 wherein the detection means comprises means to monitor electricity and/or water usage in the premises or comprises means to monitor the use of entry and/or exit points of the premises.

14. The method of any of claims 9 to 13 wherein the electrically operable stop valve comprises a motorised ball valve or a solenoid valve.

15. The method of any of claims 9 to 14 further comprising the step of providing at least one flood sensor located in the premises, and wherein the system is adapted to operate the stop valve when the flood sensor is activated.
